# FASCICULE DE BREVET EUROPEEN

(11) **EP 3 478 584 B1**
(45) Date de publication et mention de la délivrance du brevet: **12.08.2020**
(21) Numéro de dépôt: 17732146.0
(22) Date de dépôt: 26.06.2017
(51) Int. Cl.: B64F 1/36, F16L 3/01

(54) **DISPOSITIF COMPRENANT UN SYSTÈME D'ENTRAINEMENT POUR L'EXTENSION ET LA RETRACTION D'UN TUYAU FLEXIBLE D'AIR CONDITIONNE**
VORRICHTUNG MIT EINEM ANTRIEBSSYSTEM ZUM AUSFAHREN UND EINZIEHEN EINES SCHLAUCHS FÜR KLIMATISIERTE LUFT
DEVICE COMPRISING A DRIVE SYSTEM FOR EXTENDING AND RETRACTING A CONDITIONED AIR HOSE

(30) Priorité: 30.06.2016 BE 201605535
(43) Date de publication de la demande: 08.05.2019
(73) Titulaire: Lebrun-Nimy SA, 7020 Nimy (BE)
(72) Inventeur: GONSETTE, Charles-Etienne, 7020 Nimy (BE); URBAIN, Claudy, 7020 Nimy (BE)
(74) Mandataire: Connor, Marco Tom
(86) Numéro de dépôt international: PCT/EP2017/065728
(87) Numéro de publication internationale: WO 2018/001971

(56) Documents cités:
- EP-A2- 2 085 311
- US-A- 4 543 677
- US-A1- 2004 209 565

## Description

### DOMAINE DE L'INVENTION

L'invention se rapporte à un système de conditionnement d'air pour contrôler la température de l'atmosphère à l'intérieur d'un aéronef, tel qu'un avion de ligne, stationné sur le tarmac d'un aéroport. En particulier, la présente invention concerne un dispositif d'extension et de rétraction d'un tuyau flexible reliant fluidiquement une unité d'air conditionné à l'intérieur d'un aéronef. Le dispositif de la présente invention comprend un système d'entraînement fiable, robuste, économique et garantissant une longue durée de vie du tuyau flexible.

### ARRIERE-PLAN TECHNOLOGIQUE

Pour des raisons d'économies de carburant et de réduction des émissions polluantes, les moteurs d'un aéronef, en particulier d'un avion de ligne, sont coupés lorsqu'il est parqué au sol sur le tarmac d'un aéroport. L'air conditionné contrôlant la température et humidité de l'air dans la cabine est donc également coupé. Les avions de lignes sont souvent équipés d'une petite turbine permettant de générer du courant et tournant indépendamment des moteurs, mais de telles turbines sont bruyantes et énergivores, et leur utilisation est interdite dans beaucoup d'aéroports, surtout en Europe.

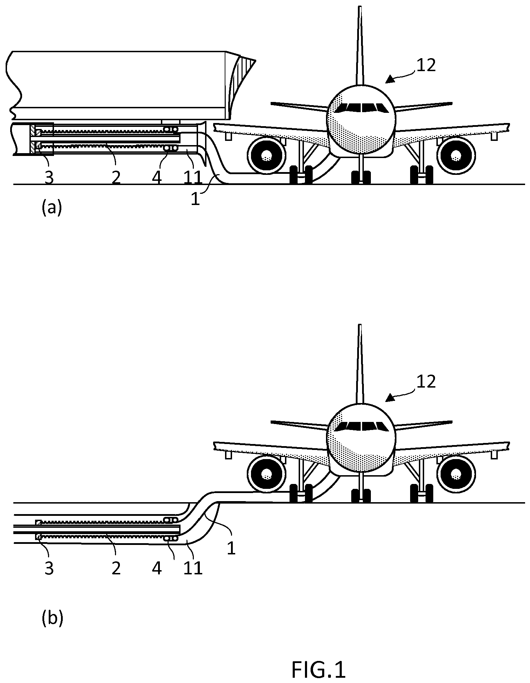

Avec la haute densité de passagers présents dans la cabine à l'atterrissage, la chaleur générée par les lumières, les nombreuses fenêtres et surtout l'isolation importante du fuselage font que la température à l'intérieur de la cabine d'un avion devient rapidement inconfortable, voire insupportable. Pour cette raison, il est habituel de coupler un tuyau flexible à la cabine d'un avion, qui est relié à une unité d'air conditionné pour souffler de l'air conditionné réfrigéré dans la cabine de l'avion. L'unité d'air conditionné peut être une unité mobile, mais elle est souvent une unité fixe et le tuyau flexible est relié à l'unité d'air conditionné par un conduit souterrain ou par la passerelle télescopique de passagers qui permet de relier la cabine de l'avion directement au terminal d'un aéroport (voir Figure 1). L'unité d'air conditionné est alors reliée à un conduit rigide qui, dans le cas d'une passerelle, est télescopique et fixé généralement sous la ladite passerelle. Le conduit s'étend jusqu'à son extrémité distale qui est couplée à un tuyau flexible permettant de connecter fluidiquement l'unité d'air conditionné à l'intérieur de la cabine d'un avion stationné sur le tarmac. Un grand degré de liberté de la position de connexion du tube flexible à un avion est essentiel, car le tube doit pouvoir être connecté à différents modèles d'avions, à différents endroits du fuselage, et à différentes positions de stationnement d'un avion. Pour cette raison, le tube flexible peut avoir une longueur de plusieurs dizaines de mètres, typiquement de l'ordre de 20 à 40 m. Il est clair qu'une fois le conditionnement de l'air de la cabine d'un avion terminé, il est nécessaire de stocker convenablement le tuyau flexible.

Une première solution assez répandue consiste à enrouler le tuyau flexible autour d'un tambour tel que communément utilisé pour les tuyaux d'arrosage. Bien que cette solution soit pratique et simple d'utilisation, elle présente l'inconvénient que le tuyau doit être déroulé de son tambour sur toute sa longueur à chaque utilisation, même si toute la longueur du tuyau n'est pas nécessaire pour le connecter à un avion. En effet, les pertes de charges (= pertes de pression) dans une portion de tuyau enroulée autour du tambour sont considérables et ne permettent pas de souffler de l'air conditionné dans la cabine d'un avion à une pression satisfaisante.

Une seconde solution existe qui est avantageuse par rapport à la première car elle permet de ne « sortir » que la longueur de tuyau flexible nécessaire à sa connexion à un avion. Telle que représentée à la Figure 1, elle consiste à l'aide d'un système d'entraînement à rétracter le tuyau flexible à l'intérieur d'un logement (11) s'étendant sous le sol ou sous la passerelle, pratiquement jusqu'à l'extrémité libre de la passerelle destinée à être couplée à un avion. Le tuyau peut simplement être entassé dans le logement, mais cette solution simple entraîne de sévères pertes de charges si on n'étend pas le tuyau flexible sur toute sa longueur avant de souffler de l'air dans le tuyau. On peut palier à cet inconvénient en renforçant le tuyau flexible par une spirale ou des anneaux couplés à la surface externe du tuyau flexible et lui conférant une rigidité radiale, tout en permettant, tel le soufflet d'un accordéon, de contracter le tuyau flexible dans une configuration contractée et de l'étendre dans une configuration étendue en variant le pas d'ouverture entre deux spires successives de la spirale ou la distance entre deux anneaux.

Des systèmes d'entraînement permettant de contrôler l'extension et la rétraction d'un tuyau flexible ont été proposés. Par exemple, EP2085311 décrit un distributeur d'un tuyau flexible logé dans un logement tubulaire s'étendant le long d'un axe longitudinal, Z. Le distributeur comprend système d'entraînement comprenant N paliers d'entraînement distribués autour d'un périmètre du tuyau flexible et disposés parallèles à l'axe longitudinal. Les N paliers sont reliés entre eux par une chaîne de sorte qu'un seul moteur couplé à un palier permette d'entraîner la rotation des N paliers. Chacun des N paliers est relié mécaniquement à un système de courroies dont la rotation entraîne le déplacement du tuyau flexible par frottement sur la surface externe de celui-ci. Comme la rotation de chacune des N courroies se fait autour de pignons montés sur un axe de rotation normal à l'axe longitudinal et aux N paliers, un système d'engrenages à 90° (engrenages coniques (148) visibles sur la Figure 4 de EP2085311) est nécessaire pour transmettre le mouvement de rotation des N paliers aux N courroies correspondantes. Ceci engendre des pertes de couple importantes, génère du bruit, et est une source potentielle de pannes.

Un autre exemple de système d'entraînement est proposé dans WO2011064808 propose un système d'entraînement comprenant un moteur, relié à un pignon monté rigidement sur un premier palier tournant sur son axe, ledit pignon étant relié à un pignon de retour par une sangle ou une chaîne munie de protrusions. La rotation du pignon motorisé entraîne la translation des protrusions qui viennent pousser sur les spires d'une spirale renforçant le tuyau flexible. Afin de répandre uniformément les forces sur tout le périmètre du tuyau, le premier palier est relié par un joint de rotation à un second palier lui transmettant ainsi le moment de rotation. Le second palier est lui-même relié à un troisième palier par un joint de rotation, et ainsi de suite jusqu'au N^{ème} ou dernier palier (par exemple un huitième palier, avec N = 8), les N paliers étant distribués autour du périmètre du tuyau flexible. Le N^{ème} palier n'est pas relié au premier palier par un joint de rotation, et les N paliers forment ainsi une chaîne ouverte de N paliers reliés entre eux par N - 1 joints de rotation.

Le système d'entraînement décrit plus haut est intéressant car, d'une part, il permet d'obtenir une synchronisation de tous les paliers, tout en n'utilisant qu'un seul moteur et, d'autre part, il ne requiert pas l'utilisation d'un mandrin à l'intérieur du tuyau flexible agissant comme surface d'appui pour un système d'entraînement extérieur au tuyau, ledit mandrin provoquant de sévères pertes de charges. Cependant, il présente aussi quelques inconvénients. Par exemple, afin qu'un moment suffisant soit transmis au N^{ème} palier, le dernier de la chaîne, un moment sensiblement plus important doit être transmis par le moteur au premier palier qui transmet une partie du couple pour étendre ou rétracter le tuyau flexible et transmet un moment de rotation au second palier et ainsi de suite jusqu'au N^{ème} palier, avec à chaque transmission, une fraction seulement du moment reçu du palier précédent étant transmis au palier suivant, jusqu'au dernier (N^{ème}) palier qui doit recevoir un moment suffisant pour sa contribution au mouvement du tuyau flexible. Le premier palier au moins, doit donc être surdimensionné par rapport au moment réellement nécessaire à l'extension et rétraction d'un tuyau flexible. Par facilité et simplicité de montage et entretien, tous les paliers sont normalement identiques, ce qui implique un surdimensionnement général du système d'entraînement dans son ensemble. Un autre inconvénient du système décrit dans WO2011064808 est que toutes les forces pour l'extension et rétraction du tuyau flexible sont concentrées sur les spires dont l'interface avec la surface externe du tuyau flexible est donc fortement sollicitée et s'abîme rapidement, nécessitant le changement du tuyau flexible à intervalles trop courts. De plus, ce système d'entraînement ne fonctionne pas sur des tuyaux flexibles ne comprenant pas de spirales.

La présente invention propose une solution permettant de palier aux inconvénients du système d'entraînement décrit dans WO2011064808. En particulier, la présente invention permet de réduire le dimensionnement du système d'entraînement. Elle permet également de prolonger la durée de vie d'un tuyau flexible, dont le changement est une opération coûteuse.

### RESUME DE L'INVENTION

L'invention est telle que définie dans la revendication principale et des variantes préférées sont définies dans les revendications dépendantes. La présente invention comporte notamment un dispositif de stockage et d'extension d'un tuyau flexible pour l'apport d'air conditionné à un aéronef au sol ou à tout autre espace intérieur, ledit dispositif comprenant :
(a) Un logement tubulaire s'étendant le long d'un axe longitudinal, Z, et comprenant une première extrémité libre et ouverte, ledit logement tubulaire permettant de stocker,
(b) Un tuyau flexible comprenant une extrémité avale qui est libre et une extrémité amont qui est en communication fluidique avec une unité d'air conditionné et qui est éloignée de la première extrémité du logement,
(c) Un système d'entraînement comprenant N paliers d'entraînement distribués autour d'un périmètre du tuyau flexible et situés adjacents à la première extrémité du logement, la rotation des N paliers d'entraînement permettant de contrôler, dans un premier sens de rotation, l'extension et, dans un second sens de rotation, la contraction du tuyau flexible entre,
   (i) une **configuration contractée** dans laquelle l'extrémité avale du tuyau flexible se situe dans le logement et adjacente à la première extrémité du logement, et
   (ii) une **configuration étendue** dans laquelle l'extrémité avale du tuyau flexible est hors du logement et éloignée de la première extrémité du logement.

Le système d'entraînement d'un dispositif selon la présente invention comprend N = 4 à 8 paliers d'entraînement disposés autour de et chacun perpendiculaire à l'axe longitudinal, Z, un premier palier d'entraînement étant relié à un moteur apte à contrôler sa rotation autour de son axe, ledit premier palier d'entraînement étant relié en série aux N - 1 autres paliers d'entraînement par des joints de rotation permettant la transmission d'une rotation du premier palier d'entraînement aux N - 1 autres paliers d'entraînement, le N^{ème} palier d'entraînement étant lui-même relié par un joint de rotation au premier palier d'entraînement, formant ainsi une chaîne fermée de N paliers d'entraînement reliés les uns aux autres par N joints de rotation.

Si les joints de rotation sont des joints non-homocinétiques tels que des joints de cardan, de préférence des joints de cardans doubles, alors le nombre, N, de paliers d'entraînement doit être pair et est de préférence, N = 4, 6 ou 8 paliers d'entraînement. Dans le cas de joint homocinétiques, le nombre, N, de paliers d'entraînement peut être pair ou impair. Par exemple, le dispositif peut comprendre N = 4, 5, 6, 7 ou 8 paliers d'entraînement. De référence, le dispositif comprend N = 4 à 6 paliers d'entraînement, et encore de préférence comprend N = 4 ou 6 paliers d'entraînement reliés entre eux par des joints cardans, de préférence des joints cardans doubles. On peut citer comme exemples de joints homocinétiques, les joints Rzeppa, les joints tripodes ou les joints Tracta, tous bien connus de l'homme du métier.

Dans une variante préférée de la présente invention, chacun des N paliers d'entraînement comprend un pignon d'entraînement denté couplé à une surface de renvoi, par exemple un pignon libre, par une chaîne comprenant des palettes ayant une extrémité libre flexible montées de sorte qu'en permanence, les extrémités libres d'un nombre de palettes soient en contact avec une surface externe du tuyau flexible. La translation des palettes en contact avec le tuyau flexible dans un sens ou dans l'autre selon le sens de rotation du palier d'entraînement correspondant applique un frottement sur la surface externe du tuyau flexible qui permet ainsi de contrôler l'extension ou la rétraction de celui-ci. La surface libre flexible des palettes peut avoir la géométrie d'un profil carré, en U, triangulaire, trapézoïdal, ou en peigne comprenant plusieurs lames. La surface libre flexible des palettes forme une surface de contact avec la surface externe du tuyau flexible, ladite surface de contact ayant de préférence une largeur moyenne mesurée dans la direction de l'axe longitudinal d'au moins 10 mm, de préférence d'au moins 15 mm, encore de préférence d'au moins 20 mm, afin d'offrir une surface de contact importante avec la surface externe du tuyau flexible.

Dans une variante alternative de la présente invention, chacun des N pignons d'entraînement est couplé à un palier de renvoi par une courroie munie de protrusions externes dont la translation dans un sens ou dans l'autre selon le sens de rotation du palier d'entraînement correspondant applique un frottement sur une surface externe du tuyau flexible qui permet ainsi de contrôler l'extension ou la rétraction de celui-ci.

Dans les deux variantes précédentes, le tuyau flexible peut être renforcé par une spirale couplée à la surface externe du tuyau flexible et lui conférant une rigidité radiale, tout en permettant de contracter le tuyau flexible dans sa configuration contractée et de l'étendre dans sa configuration étendue en variant le pas d'ouverture entre deux spires successives de la spirale. Le système d'entraînement comprend alors de préférence au moins deux, de préférence au moins trois ou plus palettes flexibles ou protrusions externes comprises entre deux spires de la spirale dans la configuration étendue du tuyau flexible.

Dans une autre variante de la présente invention, chacun des N paliers d'entraînement est muni d'un pignon d'entraînement monté rigidement sur chaque palier d'entraînement, et comprenant une surface périphérique sensiblement cylindrique en contact avec une surface externe du tuyau flexible et dont la rotation dans un sens ou dans l'autre applique un frottement sur ladite surface externe du tuyau flexible qui permet ainsi de contrôler l'extension ou la rétraction de celui-ci.

Le dispositif selon la présente invention peut de plus comprendre un tube rigide, au moins partiellement enrobé par une portion du tuyau flexible incluant son extrémité amont. Ce tube rigide s'étend le long d'un axe longitudinal depuis une première extrémité en communication fluidique avec une source d'air conditionné, jusqu'à une seconde extrémité qui est libre, sur une longueur égale à au moins 80%, de préférence au moins 90%, encore de préférence au moins 95% de la longueur totale du tuyau flexible dans sa configuration contractée à partir de son extrémité amont. L'extrémité amont du tuyau flexible peut avantageusement être fixée à une bague de couplage qui entoure le tube rigide en formant un couplage étanche entre le tube rigide et le tuyau flexible, ladite bague de couplage étant montée sur le tube rigide de sorte à pouvoir coulisser le long du tube rigide. Le coulissement de la bague de couplage permet d'augmenter le rayon d'action du tuyau flexible d'une distance correspondant à la longueur sur laquelle la bague de couplage peut coulisser, sans sur-dimensionner aucun élément du dispositif. Par exemple, la bague de couplage peut se translater le long du tube rigide sur au moins 40%, de préférence au moins 70% de la longueur du tube rigide. En particulier, la bague de couplage peut par exemple coulisser sur une distance d'au moins 3 m, de préférence au moins 4 m, encore de préférence au moins 5 m.

Le dispositif selon la présente invention peut aussi comprendre une bague fixe, qui est fixée adjacente à la deuxième extrémité du tube rigide et qui forme une surface d'appui située à l'intérieur du tuyau flexible pour le système d'entraînement qui est situé à l'extérieur du tuyau flexible. Une telle bague est particulièrement intéressante pour des tuyaux flexibles non renforcés par une spirale ou des anneaux, mais est avantageuse avec ou sans un tel renfort, car elle permet de pincer la paroi du tuyau flexible entre le système d'entraînement situé du côté extérieur de la paroi du tuyau flexible et la bague fixe située du côté intérieur de ladite paroi.

### BREVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :
Fig.1 est une vue d'ensemble d'un tuyau flexible reliant une unité d'air conditionné (non illustrée) à un avion par l'intermédiaire d'un conduit, (a) fixé à une passerelle télescopique pour passagers et (b) s'étendant dans un conduit souterrain.
Fig.2 représente un dispositif d'extension et de rétraction d'un tuyau flexible avec le tuyau flexible (a) dans sa configuration contractée et (b) dans une configuration partiellement étendue.
Fig.3 représente un autre dispositif d'extension et de rétraction d'un tuyau flexible avec le tuyau flexible (a) dans sa configuration contractée et (b) dans une configuration partiellement étendue.
Fig.4 représente une variante d'un dispositif d'extension et de rétraction d'un tuyau flexible avec le tuyau flexible (a) dans sa configuration contractée et (b) dans une configuration partiellement étendue.
Fig.5 représente une autre variante d'un dispositif d'extension et de rétraction d'un tuyau flexible avec le tuyau flexible (a) dans sa configuration contractée et (b) dans une configuration partiellement étendue.
Fig.6 représente des systèmes d'entraînement du tuyau flexible (a) vue de face d'une première variante avec N = 6, (b) vue de face d'une seconde variante avec N = 4, et (c) vue de profil d'une variante préférée avec N = 6.
Fig.7 illustre différentes densités de palettes montées sur des chaînes d'un système d'entraînement adéquat pour la présente invention.
Fig.8 montre différents types de profiles de l'extrémité libre flexible d'une palette adéquate pour la présente invention.
Fig.9 illustre une variante préférée de système d'entraînement s'adaptant à des tuyaux flexibles de différents rayons nominaux.
Fig.10 compare le rayon d'action d'un tuyau flexible de longueur donnée entre (a) un dispositif de l'art antérieur et (b) un dispositif selon une variante préférée de la présente invention.

### DESCRIPTION DETAILLEE DE MODES DE REALISATION PARTICULIERS

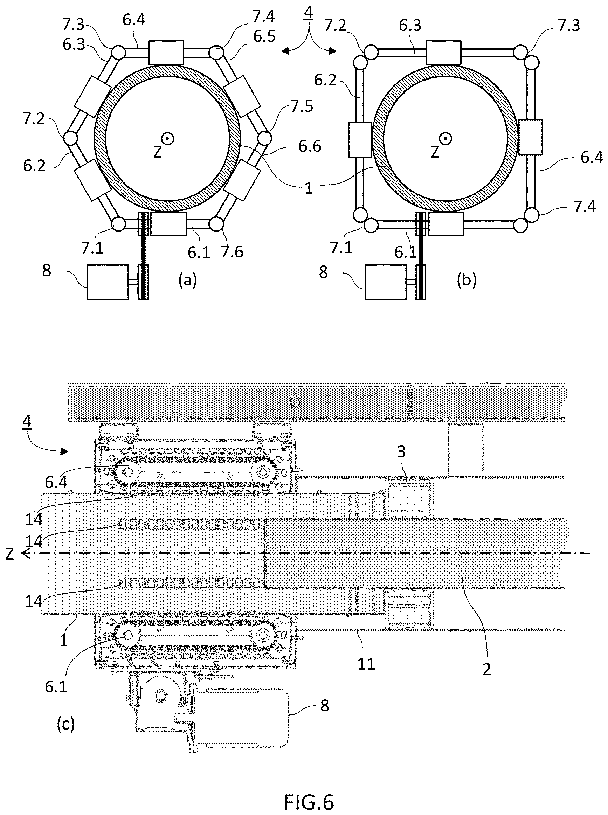

Tel que représenté aux Figures 1 et 6(c), le dispositif d'extension et de rétraction d'un tuyau flexible selon la présente invention comprend un logement tubulaire (11) s'étendant le long d'un axe longitudinal, Z, et comprenant une première extrémité libre et ouverte. Ledit logement tubulaire permet de stocker un tuyau flexible. La longueur minimale du logement tubulaire doit donc être suffisante pour contenir une fraction substantielle de la longueur du tuyau flexible dans sa configuration contractée.

Un tuyau flexible (1) selon la présente invention comprend une extrémité avale qui est libre et une extrémité amont qui est en communication fluidique avec une unité d'air conditionné. L'extrémité amont est éloignée de la première extrémité du logement tubulaire et est généralement couplée à un tube rigide, soit de manière fixe, soit de sorte à pouvoir coulisser le long du tube rigide, comme expliqué plus en détails plus bas. L'extrémité avale du tuyau flexible est généralement munie d'un élément de couplage à une entrée de fuselage d'un avion.

Tel qu'illustré à la Figure 6(a)&(b), un dispositif selon la présente invention comprend un système d'entraînement (4) comprenant N paliers d'entraînement (6.1-6.6) distribués autour d'un périmètre du tuyau flexible et chacun étant disposé perpendiculaire à l'axe longitudinal, Z. Les N paliers pouvent entrer en rotation autour de leur axe de rotation respectif. Le nombre N de paliers est compris entre 4 et 8, et est de préférence sélectionné parmi N = 4, 5, 6 ou 7, et encore plus de préférence parmi N = 4 ou 6 tels que représentés aux Figures 6(a)&(b). Un premier palier d'entraînement est relié à un moteur (8) apte à contrôler la rotation du premier palier d'entraînement autour de son axe. Le premier palier d'entraînement est relié en série aux N - 1 autres paliers d'entraînement par des joints de rotation (7.1-7.6) permettant la transmission de la rotation du premier palier d'entraînement aux N - 1 autres paliers d'entraînement. Le N^{ème} (et dernier) palier d'entraînement étant lui-même relié par un joint de rotation au premier palier d'entraînement, formant ainsi une chaîne fermée de N paliers d'entraînement reliés les uns aux autres par N joints de rotation. La chaîne fermée de N paliers d'entraînement est fixée aux parois du logement tubulaire par des supports qui sont couplés à certains paliers d'entraînement par l'intermédiaire de roulements mécaniques, par exemple des roulements à billes (pas illustrés sur les Figures).

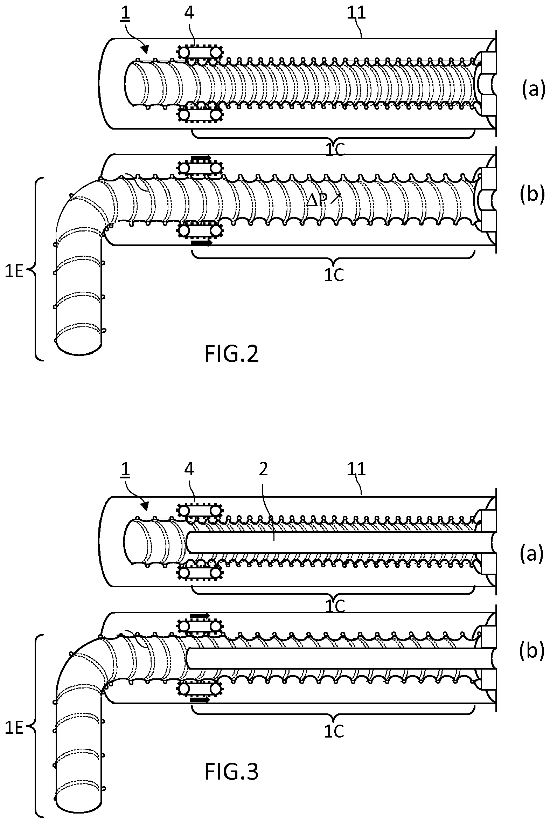

La rotation des N paliers d'entraînement permet de contrôler, dans un premier sens de rotation, l'extension et, dans un second sens de rotation, la contraction du tuyau flexible entre,
(i) une configuration contractée (1C) dans laquelle l'extrémité avale du tuyau flexible est adjacente à la deuxième extrémité du tube rigide (cf. (a) des Figures 2 à 5), et
(ii) une configuration étendue (1E) dans laquelle l'extrémité avale du tuyau flexible est éloignée de la deuxième extrémité du tube rigide et peut être couplée à un avion stationné dans le rayon d'action du tuyau flexible (cf. (b) des Figures 2 à 5) illustrant une configuration partiellement étendue),

L'essence de l'invention réside dans l'utilisation d'une chaîne fermée de N paliers reliés entre eux par N joints de rotation, contrairement au système d'entraînement décrit dans WO2011064808. Un premier avantage d'une chaîne fermée par rapport à une chaine ouverte de N paliers d'entraînement est que dans une chaîne fermée, le moment transmis par le moteur au premier palier d'entraînement (6.1) est transmis simultanément aux deuxième et N^{ème} paliers d'entraînement (6.2, 6.N) qui sont situés de part et d'autre du premier palier d'entraînement. Les deuxième et N^{ème} paliers d'entraînement (6.2, 6.N) transmettent le moment de rotation aux troisième et (N - 1)^{ème} paliers d'entraînement, et ainsi de suite, jusqu'au dernier palier d'entraînement. Dans le cas où N est pair (cas préféré), le dernier palier d'entraînement auquel un moment de rotation est transmis, et donc celui qui reçoit le plus petit moment de rotation, est le (1 + N / 2)^{ème} palier d'entraînement. Par contraste, dans le cas d'une chaîne ouverte, le dernier palier à recevoir un moment de rotation est le N^{ème}. Comme pour N = 4 à 8, N > (1 + N / 2), le N^{ème} palier d'entraînement d'une chaîne ouverte reçoit nécessairement un plus petit moment de rotation inférieur à celui que reçoit le (1 + N / 2)^{ème} palier d'entraînement d'une chaîne fermée. Une chaîne ouverte de N paliers d'entraînement doit donc être surdimensionnée par rapport à une chaîne fermée de N paliers d'entraînement pour une valeur égale du plus petit moment de rotation transmis à un palier d'entraînement de la chaîne. L'utilisation d'une chaîne fermée permet donc de réduire la taille du système d'entraînement (4) ainsi que de réduire les coûts de ses composants, malgré qu'elle requiert un joint de rotation supplémentaire.

Dans le même esprit de réduire la taille et le coût du système d'entraînement, il est préféré d'utiliser moins que 8 paliers d'entraînement. En particulier, comme illustré aux Figures 6(a)&(b) il est préféré d'utiliser N = 4 ou N = 6 paliers d'entraînement. Ceci permet de réduire considérablement l'encombrement du système d'entraînement qui doit être fixé sous une passerelle ou dans un passage souterrain, tel qu'illustré à la Figure1.

Les joints de rotation peuvent être homocinétiques ou pas. Si des joints non-homocinétiques sont utilisés, tels que des joints cardans, le nombre N de paliers doit être pair afin de ne pas provoquer de blocage de la rotation sur elle-même de la chaîne. Dans ce cas, il est préférable que le nombre, N, de paliers soit égal à 4, 6, ou 8, de préférence N = 4 ou 6. Si des joints cardans sont utilisés, surtout pour des valeurs faibles de N, il est préférable d'utiliser des joints de cardans doubles, permettant de réduire de moitié l'angle de chaque élément d'un cardan double par rapport à l'angle entre les axes successifs d'un premier et second paliers (cf. Figure 6(b) dans laquelle des joints de cardan doubles sont représentés schématiquement comme des double-cercles).

Les joints homocinétiques permettent d'utiliser des nombres, N, impaires de paliers. De préférence, N est compris entre 4 et 7. Un nombre N inférieur à 4 requiert des angles entre paliers plus importants et difficiles à gérer. Un nombre N supérieur à 7 ou 8 augmente le prix et l'encombrement du dispositif sans avantage particulier. Des joints de rotation homocinétiques incluent par exemple les joints Rzeppa, les joints tripodes ou les joints Tracta, tous bien connus de 'homme du métier.

Dans un mode de réalisation préféré de la présente invention illustré à la Figure 6(c), chacun des N paliers d'entraînement (6.1-6.6) du système d'entraînement comprennent un pignon d'entraînement denté monté rigidement sur chaque palier d'entraînement et couplé à une surface de renvoi par une chaîne (13). La surface de renvoi peut être un pignon libre, denté ou pas, ou simplement une surface courbe permettant le glissement de la chaîne et son retour vers le pignon d'entraînement denté. La chaîne comprend des palettes (14) ayant une extrémité libre (14f) flexible montées de sorte que les extrémités libres d'au moins deux palettes soient en permanence en contact avec une surface externe du tuyau flexible. La rotation de la chaîne entraîne la translation dans un sens ou dans l'autre selon le sens de rotation des palettes se trouvant dans la portion de chaîne adjacente au tuyau flexible comprise entre le pignon d'entraînement denté et la surface de renvoi. La translation des palettes frottant contre la surface externe du tuyau flexible entraîne l'extension ou la rétraction de celui-ci.

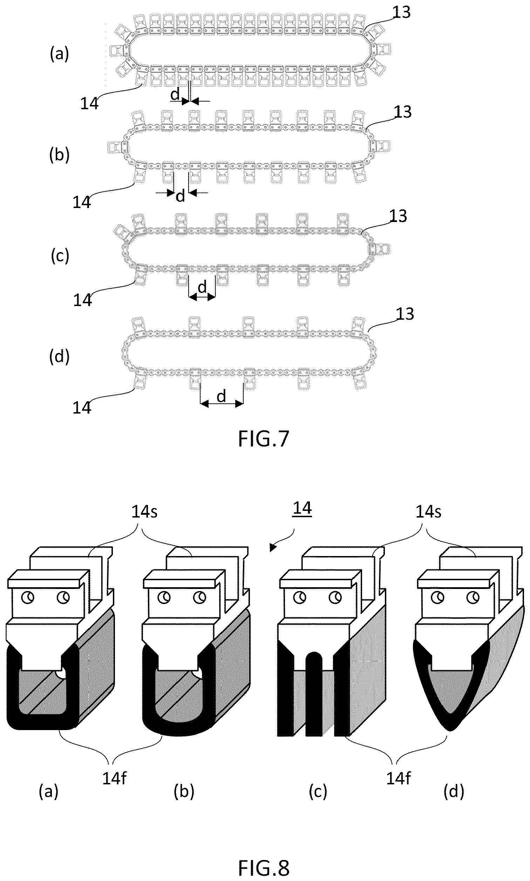

Comme illustré à la Figure 8, chaque palette a une portion de fixation (14s) comprenant des moyens de fixation à la chaîne, et une extrémité libre (14f) qui est flexible et qui entre en contact temporairement avec la surface du tuyau flexible lors de la rotation de la chaîne autour du pignon d'entraînement. La portion de fixation à la chaîne est évidente pour tout homme du métier, et le mécanisme des moyens de fixation utilisé n'influence pas la présente invention, tant que la fixation est suffisamment résistante pour supporter les contraintes d'utilisation du dispositif. En général elle comprendra deux orifices correspondant aux orifices des maillons de la chaîne prévus pour recevoir les rivets permettant de lier les maillons de chaîne ensemble en leur laissant un degré de liberté en rotation.

L'extrémité libre (14f) des palettes doit être suffisamment flexible pour suivre la topographie de, et pour ne pas abîmer la surface du tuyau flexible et suffisamment rigide pour provoquer la translation du tuyau flexible par frottement. L'extrémité libre est de préférence réalisée en un matériau élastomère, tel que caoutchouc naturel ou synthétique, élastomère thermoplastique, par exemple de polyuréthane, oléfine, etc. La forme de l'extrémité libre n'est limitée que par la nécessité d'offrir une surface de contact avec la surface externe du tuyau flexible suffisamment grande, adhérente et peu agressive afin de permettre le transfert d'énergie cinétique des palettes au tuyau flexible sans abîmer sa surface externe. La Figure 8 montre quelques exemples de palettes ayant des extrémités libres (14f) flexibles de différentes géométries. A la Figure 8(a), l'extrémité libre a un profil rectangulaire, offrant une grande surface de contact avec la surface externe du tuyau flexible. La Figure 8(b) montre un profil en U qui permet de créer plus de friction avec la surface externe du tuyau flexible. La Figure 8(c) montre un profil en peigne avec plusieurs lames flexibles. Les lames sont représentées à la Figure 8(c) comme étant droites et parallèles les unes aux autres, mais elles peuvent être courbées, par exemple formant un éventail. Le nombre de lames n'est pas limité. La Figure 8(d) montre un profil triangulaire, qui permet une meilleure pénétration entre deux spires d'une spirale de renfort, lorsqu'un tuyau flexible renforcé d'une spirale se présente sous une palette dans sa configuration contractée, avec les spires de la spirale étant pratiquement en contact les unes avec les autres. D'autres profils sont possibles tels qu'un profil trapézoïdal avec la petite base ou, alternativement, la grande base en contact avec la surface externe du tuyau flexible. La Figure 8 montre des profils creux. Selon la flexibilité désirée, le matériau utilisé et les dimensions de l'extrémité libre, des profils pleins peuvent aussi être utilisés.

Afin de permettre l'extension ou la rétraction du tuyau flexible par frottement des palettes sans abîmer la surface externe du tuyau flexible, il est préférable que la surface libre flexible des palettes forme une surface de contact importante avec la surface externe du tuyau flexible. Par exemple, pour des profils du type illustrés à la Figure 8(a) ou (b), ladite surface de contact peut avoir une largeur moyenne mesurée dans la direction de l'axe longitudinal, Z, d'au moins 10 mm, de préférence d'au moins 15 mm, encore de préférence d'au moins 20 mm. La longueur de la surface dans la direction normale à la largeur peut être d'au moins 20 mm, de préférence d'au moins 30 mm, encore de préférence d'u moins 35 mm. L'entre-axe entre le pignon d'entraînement denté et la surface de retour est de préférence compris entre 200 et 600 mm. Dans le cas d'un tuyau flexible renforcé d'une spirale de renfort, l'entre-axe est de préférence au moins égal au pas séparant deux spires de la spirale du tuyau flexible dans sa configuration étendue. De préférence, l'entre-axe est au moins égal à deux pas séparant trois spires de la spirale du tuyau flexible dans sa configuration étendue.

Les palettes sont montées sur la chaîne de préférence à des intervalles, d, de 1 à 60 mm, de préférence de 2 à 10 mm de distance séparant une palette de l'autre (ct. Figure 7). En pratique, on contrôle la densité de palettes montées sur la chaîne selon la fraction de maillons sur lesquels sont montés des palettes (p.ex. une palette tous les n maillons). La Figure 7 illustre différents exemples. A la Figure 7(a) chaque maillon (ou paire de maillons) comprend une palette. Les Figures 7(b) à (d) montrent d'autres exemples de chaînes comprenant une densité inférieure de palettes, avec une palette tous les deux maillons, tous les trois maillons, et tous les quatre maillons, respectivement. La densité de maillons optimale dépend d'un équilibre entre coût de production, entraînement idéal d'un tuyau flexible et, s'il y en a une, du pas entre spires d'une spirale de renfort. Il est préférable qu'au moins 5, de préférence au moins 8, encore de préférence au moins 10, encore de préférence au moins 12 et même au moins 15 palettes et plus soient en permanence en contact avec la surface externe du tuyau flexible afin d'optimiser le transfert de mouvement au tuyau flexible.

Dans une variante alternative, chacun du ou des plusieurs pignons d'entraînement sont couplés à une surface de renvoi par une courroie crantée ou pas, sur une ou deux faces, et munie de protrusions au moins à l'extérieur (= face de la courroie en contact avec le tuyau flexible). Comme pour la variante précédente, la translation des protrusions provoquée par la rotation de la courroie dans un sens ou dans l'autre selon le sens de rotation du palier d'entraînement correspondant applique un frottement sur une surface externe du tuyau flexible qui permet ainsi de contrôler l'extension ou la rétraction de celui-ci. Les protrusions de la courroie peuvent être flexibles ou rigides, mais elles sont de préférence flexibles afin de ménager la surface externe du tuyau flexible.

Dans des dispositifs de plus petites dimensions, les N paliers (6.1-6.6) du système d'entraînement comprennent un pignon ou roue d'entraînement monté rigidement sur chaque palier d'entraînement. Chaque pignon ou roue d'entraînement a une épaisseur suffisante et entre en contact directement la surface externe du tuyau flexible. Telles les roues d'une voiture, le frottement des pignons d'entraînement sur la surface externe du tuyau flexible transforme la rotation des pignons d'entraînement en translation du tuyau flexible. Le pignon d'entraînement peut d'ailleurs être muni d'un pneu qui atténue l'usure de la surface externe du tuyau flexible en contact avec celui-ci.

Comme mentionné plus haut, dans beaucoup de dispositifs de conditionnement d'air - mais pas dans tous- le tuyau flexible est renforcé par des anneaux ou par une spirale couplée à la surface externe du tuyau flexible et lui conférant une rigidité radiale, tout en permettant de contracter le tuyau flexible dans sa configuration contractée et de l'étendre dans sa configuration étendue en variant le pas entre anneaux ou le pas d'ouverture entre deux spires successives de la spirale. Une telle spirale offre de nombreux avantages, en assurant en permanence une certaine ouverture de l'orifice du tuyau sur sa longueur et en limitant la torsion du tuyau flexible ce qui permet d'éviter, par exemple, des zones de pincement du tuyau flexible où l'air ne peut plus circuler.

Dans le cas de tuyaux flexibles renforcés par des anneaux ou par une spirale, le système d'entraînement comprend alors de préférence au moins deux, de préférence au moins trois, encore de préférence au moins cinq ou même huit ou plus palettes flexibles ou protrusions externes comprises entre deux anneaux ou spires de la spirale adjacents dans la configuration étendue du tuyau flexible. En pratique, les palettes poussent le tuyau par frottement avec la surface externe de celui-ci. De plus, les une, deux, voire trois palettes en contact avec des spires ou anneaux en saillie du tuyau flexible, contribuent au mouvement du tuyau flexible en poussant sur les spires ou anneaux.

La Figure 2 montre un premier exemple de dispositif selon la présente invention. Le tuyau flexible (1) est renforcé d'une spirale et est couplé à son extrémité amont à une arrivée d'air conditionné reliée à une unité d'air conditionné (pas illustrée sur la Figure). Le dispositif d'entraînement (4) est tel que décrit plus haut en référence à la Figure 6. La Figure 2(a) montre un tuyau flexible dans sa configuration contractée (1C), et est entièrement contenue dans le logement tubulaire (11) avec les spires de la spirale comprimées les unes contre les autres. En activant la rotation des paliers, les palettes ou protrusions frottent sur la surface externe du tuyau flexible, et poussent sur les spires de la spirale et étendent ainsi le tuyau flexible qui sort du logement tubulaire dans sa configuration étendue (1E) (cf. Figure 2(b)). Le dispositif de la Figure 2 fonctionne, mais a l'inconvénient de générer d'importantes pertes de charges, ΔP, dans un courant d'air conditionné circulant dans la portion de tuyau flexible encore stockée dans le logement tubulaire (11) dans sa configuration contractée (1C). En effet, la contraction des spires forme des convolutions importantes dans la paroi intérieure du tuyau flexible dans sa configuration contractée, qui génèrent des turbulences et des pertes de pression (dans sa configuration étendue (1E), la surface interne du tuyau flexible est relativement lisse). Il s'en suit qu'il est conseillé d'étende le tuyau flexible sur toute sa longueur pour éviter des pertes de charges, certes moins importantes que dans le cas d'un tuyau flexible enroulé autour d'un tambour, mais tout de même conséquentes.

Pour pallier à l'inconvénient des pertes de charges décrites plus haut, la variante de la Figure 3, qui comme la Figure 2 illustre un dispositif avec le tuyau flexible dans sa configuration (a) contractée (1C) et (b) partiellement étendue (1E), comprend de plus un tube rigide (2) s'étendant le long de l'axe longitudinal, Z, depuis une première extrémité en communication fluidique avec une source d'air conditionné, jusqu'à une seconde extrémité qui est libre. Une portion au moins du tube rigide s'étendant depuis sa seconde extrémité est contenue ou enveloppée dans le tuyau flexible qui, dans sa configuration contractée, est stocké sur le tube rigide sur au moins 80%, de préférence au moins 90%, encore de préférence au moins 95% de la longueur totale du tuyau flexible dans sa configuration contractée à partir de son extrémité amont, seule son extrémité avale dépassant du tube rigide (cf. Figure 3(a)). Le système d'entraînement (4) est positionné adjacent à la seconde extrémité du tube rigide afin de pouvoir « pousser » le tuyau flexible sur le tube rigide pendant l'opération de contraction et stockage du tuyau flexible. Tel que représenté à la Figure 3(b), lorsqu'on étend le tuyau flexible sur une partie seulement de sa longueur, le tube rigide est contenu dans la portion (1C) de tuyau flexible restant dans sa configuration contractée et l'air conditionné s'écoulant dans le tube rigide ne « voit » pas les convolutions de la paroi interne du tuyau flexible dans sa configuration contractée et ne pénètre dans le tuyau flexible que dans sa portion (1E) qui est étendue, avec des parois internes beaucoup plus lisses. Par conséquent, les pertes de charges sont réduites considérablement comparées à la variante de la Figure 2.

La longueur du tube rigide dépend de la longueur nécessaire à stocker le tuyau flexible dans sa configuration rétractée. Le degré de contraction d'un tube flexible spiralé tel que décrit supra, défini comme le rapport LC / LE, entre la longueur, LC, du tuyau flexible dans sa configuration contractée et sa longueur, LE, dans sa configuration étendue, est typiquement de l'ordre de 1 / 10 à 1 / 6. Pour un tuyau flexible de longueur, LE, de 30 m, cela signifie que la longueur du tube rigide nécessaire à stocker le tuyau flexible dans sa configuration rétractée peut être de l'ordre de 3 à 5 m. En pratique et dépendant fortement de la taille du dispositif, un tube rigide a une longueur d'au moins 2 m, de préférence d'au moins 3 m, encore de préférence d'au moins 5 m. Afin de contenir l'encombrement et les coûts d'installation du dispositif, il est préférable que le tube rigide ait une longueur inférieure à 10 m, de préférence inférieure à 8 m et encore de préférence, inférieure à 6 m.

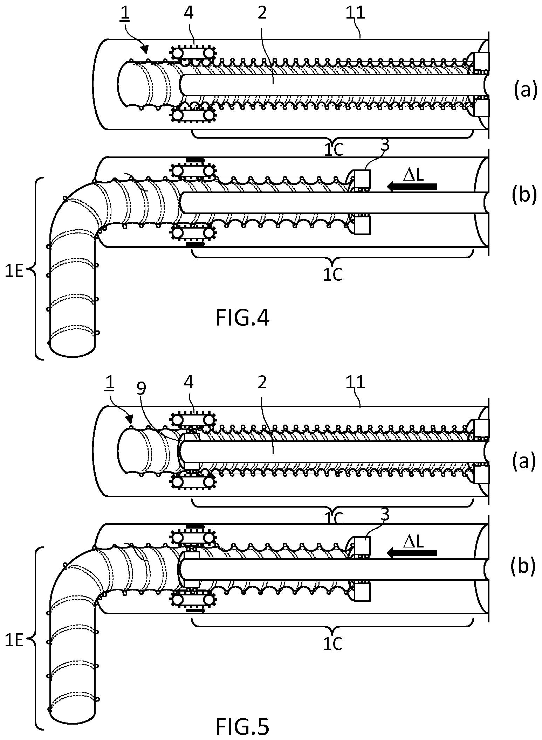

Dans une variante illustrée à la Figure 5, particulièrement avantageuse dans le cas de tuyaux flexibles qui ne sont pas renforcés par des anneaux ou par une spirale, mais également préférée dans le cas d'un tel renfort, une bague fixe (9) est fixée adjacente à la deuxième extrémité du tube rigide. Une telle bague fixe, qui ne peut se translater le long du tube rigide, permet de former une surface d'appui située à l'intérieur du tuyau flexible pour le système d'entraînement qui est situé à l'extérieur du tuyau flexible, sans créer de turbulences comme le ferait un mandrin. Une surface d'appui peut être utile pour améliorer l'efficacité du transfert d'énergie du système d'entraînement en mouvement du tuyau flexible car la paroi du tuyau flexible est pincée entre les palettes, protrusions ou pignon et la surface d'appui formée par la bague fixe (9). Pour plus d'efficacité, la bague fixe peut être munie de roulements là où elle forme des surfaces de contact avec les différents éléments du système d'entraînement. Un tel dispositif réduit considérablement l'usure de la surface externe du tuyau flexible.

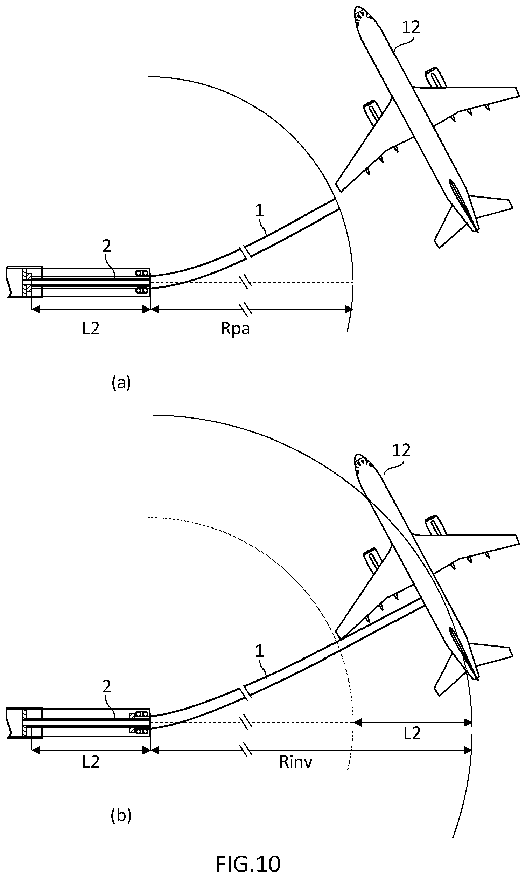

Comme les aéroports et les compagnies aériennes demandent de plus en plus de flexibilité dans le stationnement des avions et donc dans la fourniture de services tels que l'apport d'air conditionné, la longueur des tuyaux flexibles doit augmenter et, en conséquence, aussi la longueur des tubes rigides, ce qui a un impact considérable sur l'encombrement des dispositifs, et surtout sur le prix d'installation ou d'adaptation de systèmes existants. Pour répondre à ces besoins, sans augmenter les dimensions ni du tuyau flexible, ni du tube rigide, dans une variante illustrée aux Figures 4 et 5, le tuyau flexible (1) est fixé par son extrémité amont à une bague de couplage (3), laquelle entoure le tube rigide en formant un couplage étanche entre le tube rigide et le tuyau flexible. La bague de couplage (3) est montée sur le tube rigide de sorte à pouvoir coulisser le long du tube rigide. De cette manière, comme illustré aux Figures 4(b), 5(b) et 10, on augmente le rayon d'action, Rpa, d'un tuyau flexible de longueur donnée par la longueur, L2, du tube rigide le long de laquelle la bague de couplage peut se déplacer, soit de plusieurs mètres, permettant d'atteindre des avions situés à un rayon, Rinv = Rpa + L2.

La bague de couplage comprend une ouverture centrale munie de préférence :
(a) de billes ou de roulettes distribuées sur un périmètre de ladite ouverture centrale et reposant sur une surface externe du tube rigide, permettant la translation de ladite bague de couplage le long du tube rigide, et
(b) d'un joint d'étanchéité dynamique permettant d'assurer l'étanchéité entre l'ouverture centrale et le tube rigide même lors de la translation de la bague de couplage le long du tube rigide.

Des roulettes permettent d'assurer une translation de la bague de couplage sans rotation de celle-ci autour de l'axe longitudinal, Z, du tube rigide. Si une telle rotation devait être évitée, on peut munir la surface du tube rigide de guides, telles que des rainures, s'étendant parallèles à l'axe longitudinal, Z, dans lesquelles les roulettes seraient guidées. Dans la pratique, sauf contraintes particulières et en faisant attention d'éviter toute torsion excessive du tuyau flexible, il a été constaté qu'il peut être préférable de permettre à la bague de couplage d'entrer en rotation autour de l'axe longitudinal, Z, du tube rigide. En effet, sans rotation, c'est toujours la même portion de tuyau flexible qui entre en contact avec et frotte le sol du tarmac. On observe donc une usure plus rapide sur ces portions que sur les portions opposées du tuyau flexible qui n'entrent jamais en contact avec le sol. En permettant la rotation de la bague de couplage, on permet au tuyau flexible de toucher le sol sur l'ensemble de son périmètre et d'ainsi répartir l'usure du tuyau sur une plus grande surface. On peut ainsi prolonger la vie de service d'un tuyau flexible.

La bague de couplage ne nécessite pas d'être motorisée. En effet, lors de l'extension du tuyau flexible, la portion (1C) encore contractée est étendue par le système d'entraînement, appliquant ainsi une contrainte sur la bague de couplage l'attirant vers la seconde extrémité du tube rigide. A l'inverse, lors de la rétraction du tuyau flexible, le système d'entraînement pousse le tuyau flexible sur le tube rigide, appliquant ainsi une contrainte sur la bague de couplage la repoussant de la seconde extrémité en direction de la première extrémité. Cependant, si nécessaire, la bague de couplage peut être motorisée, par exemple en la reliant mécaniquement au système d'entraînement qui est muni d'un moteur (8).

Les joints d'étanchéité dynamiques sont bien connus de l'homme du métier et le type spécifique de joints utilisé n'est pas essentiel à la présente invention, tant qu'il permet d'assurer une étanchéité aussi, de préférence, pendant le mouvement de la bague le long du tube rigide. On peut citer comme exemple,
- des joints toriques, dont la pression de contact au montage réalise l'étanchéité joint-surface ;
- des joints à quatre lobes qui est un joint de section « carrée » comportant deux lèvres actives sur chaque pièce ; l'élasticité de ces dernières assure l'étanchéité au repos ;
- des joints à lèvre L ou T, dont la lèvre, grâce à son élasticité, se trouve en contact avec la surface ;
- des joints avec manchettes et ressort, qui comprennent un ressort facilitant le contact joint-surface et améliorant l'efficacité du joint dans le temps ;
- des joints racleurs ;
- des segments, tels qu'utilisés dans les pistons.

La bague de couplage doit pouvoir se translater le long du tube rigide sur la plus grande distance possible afin d'augmenter proportionnellement le rayon d'action du tuyau flexible. De préférence la bague de couplage doit pouvoir se translater sur au moins 40%, de préférence au moins 70%, encore de préférence au moins 90%, et même au moins 95% de la longueur du tube rigide. En pratique, si la bague de couplage peut se translater sur une distance d'au moins 3 m, de préférence au moins 4 m, encore de préférence au moins 5 m, le rayon d'action du tuyau flexible en est augmenté d'autant.

Le tuyau flexible est couplé à la bague de couplage par des moyens bien connus de l'homme du métier. Par exemple l'extrémité amont du tuyau flexible peut être collée, soudée, pincée entre deux plaques, etc., ou des combinaisons de ces techniques. La manière de coupler l'extrémité amont du tuyau flexible à l'anneau de couplage n'est pas essentielle à la présente invention, tant que le couplage est étanche et suffisamment résistant aux contraintes qui y sont appliquées pendant l'utilisation du dispositif.

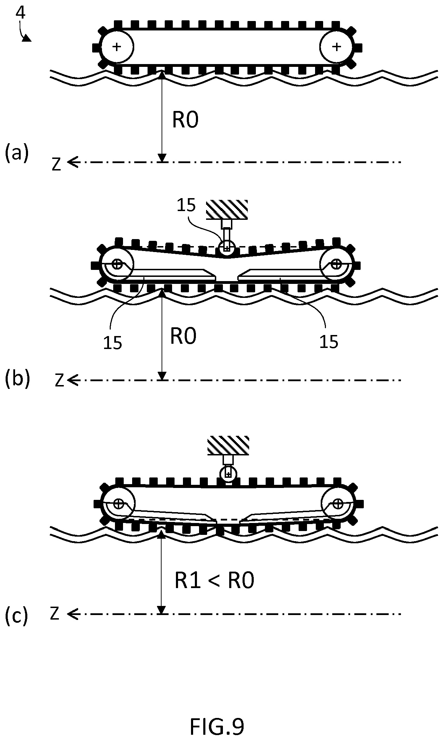

Dans la plupart des cas, les tuyaux flexibles sont livrés avec le système d'entraînement et leur diamètre nominal (càd à l'état déployé et sous pression interne) est adaptée au diamètre de la chaîne fermée de N paliers d'entraînement. Il se peut cependant que le système d'entraînement doive être adaptés à des tuyaux flexibles de diamètres différents, par exemple en cas de remplacement d'urgence d'un tuyau avarié. Il est donc avantageux s'il est possible de varier le diamètre de la chaîne fermée, pour s'adapter à des tuyaux de diamètres nominaux différents. La Figure 9(b)&(c) illustre une variante préférée d'un système d'entraînement selon l'invention dans laquelle le diamètre de la chaîne fermée est adaptable à des tuyaux flexibles de diamètres nominaux différents.

La Figure 9(a) illustre un système d'entraînement adapté à fonctionner avec un tuyau flexible de rayon, R0, uniquement. Une petite variation de R0, de l'ordre de ±10% ne devrait poser aucun problème. Mais si un tuyau flexible de rayon, R1 < R0, sensiblement inférieur à R1 devait être monté sur le système d'entraînement de la Figure 9(a), il est possible que l'entraînement du tuyau flexible ne soit pas optimal, car les forces de frottement appliquées par les palettes (14) sur la surface externe du tuyau flexible diminuerait de manière correspondante.

La Figure 9(b) montre une variante préférée, destinée comme la variante de la Figure 9(a), à entraîner un tuyau flexible de rayon nominal, R0, mais qui est également adapté à entraîner un tuyau de rayon nominal, R1 < R0, sensiblement inférieur à R1, tel qu'illustré à la Figure 9(c). Dans la variante préférée de la Figure 9(b)&(c), une chaîne d'entraînement (13) est montée, que est plus longue que la chaîne d'entraînement de la variante de la Figure 9(a). Une première portion de la chaîne d'entraînement (13) dont les palettes (14) sont en contact avec la surface externe du tuyau flexible est maintenue sous tension par un ou plusieurs tenseurs (15) résilients et maintenus en pré-contrainte de sorte à tendre la première portion de chaîne. De manière similaire, une seconde portion de chaîne d'entraînement opposée à la première portion est également maintenue sous tension par un ou plusieurs tenseurs (15) résilients et maintenus en pré-contrainte de sorte à tendre la seconde portion de chaîne. Ainsi, tel un dérailleur de bicyclette, la chaîne d'entrainement reste tendue quel que soit le rayon nominal du tuyau flexible et les palettes restent en contact avec la surface externe du tuyau. Les tenseurs (15) peuvent être montés sur des supports pivotants et résilients, tel qu'illustré à la Figure 9(b)&(c) pour les tenseurs de la première portion, ou de manière linéaire avec un ressort ou un système pneumatique, tel qu'illustré pour la seconde portion de la chaîne. L'important est qu'une force ayant une composante radiale soit appliquée sur la première portion de chaîne afin de déplacer la première portion de chaîne en vers l'axe longitudinal, Z, du tuyau.

| **REF** | **CARACTERISTIQUE** |
|---|---|
| 1 | Tuyau flexible |
| 1C | Configuration contractée du tuyau flexible |
| 1E | Configuration étendue du tuyau flexible |
| 2 | Tube rigide |
| 3 | Bague de couplage |
| 4 | Système d'entraînement |
| 6.1-6.6 | Paliers |
| 7.1-7.6 | Joints de rotation |
| 8 | Moteur |
| 9 | Bague fixe |
| 11 | Logement tubulaire |
| 12 | Avion |
| 13 | Chaîne d'entraînement |
| 14 | Palette |
| 14f | Extrémité libre flexible de la palette |
| 14s | Extrémité de fixation de la palette |
| 15 | Tenseurs de la chaîen d'entraînement |
| Z | Axe longitudinal |

## Revendications

1. Dispositif de stockage et d'extension d'un tuyau flexible pour l'apport d'air conditionné à un aéronef (12) au sol ou à tout autre espace intérieur, ledit dispositif comprenant :
(a) Un logement tubulaire (11) s'étendant le long d'un axe longitudinal, Z, et comprenant une première extrémité libre et ouverte, ledit logement tubulaire permettant de stocker,
(b) Un tuyau flexible (1) comprenant une extrémité avale qui est libre et une extrémité amont qui est apte à être en communication fluidique avec une unité d'air conditionné et qui est éloignée de la première extrémité du logement,
(c) Un système d'entraînement (4) comprenant N = 4 à 8 paliers d'entraînement (6.1-6.6) disposés autour de et chacun perpendiculaire à l'axe longitudinal, Z, distribués autour d'un périmètre du tuyau flexible et situés adjacents à la première extrémité du logement, un premier palier d'entraînement (6.1) étant relié à un moteur (8) apte à contrôler sa rotation autour de son axe, ledit premier palier d'entraînement étant relié en série aux N - 1 autres paliers d'entraînement par des joints de rotation (7.1-7.6) permettant la transmission d'une rotation du premier palier d'entraînement aux N - 1 autres paliers d'entraînement, la rotation des N paliers d'entraînement permettant de contrôler, dans un premier sens de rotation, l'extension et, dans un second sens de rotation, la contraction du tuyau flexible entre,
(i) une configuration contractée (1C) dans laquelle l'extrémité avale du tuyau flexible se situe dans le logement et adjacente à la première extrémité du logement, et
(ii) une configuration étendue (1E) dans laquelle l'extrémité avale du tuyau flexible est hors du logement et éloignée de la première extrémité du logement,
**Caractérisé en ce que**, le N^{ème} palier d'entraînement étant lui-même relié par un joint de rotation au premier palier d'entraînement, formant ainsi une chaîne fermée de N paliers d'entraînement reliés les uns aux autres par N joints de rotation.

2. Dispositif selon la revendication 1, comprenant N = 4, 6 ou 8 paliers d'entraînement et dans lequel les joints de rotation sont des joints de cardan, de préférence des joints de cardans doubles.

3. Dispositif selon la revendication 1, comprenant N = 4, 5, 6, 7 ou 8 paliers d'entraînement et dans lequel les joints de rotation sont sélectionnés parmi les joints homocinétiques, de préférence les joints Rzeppa, les joints tripodes ou les joints Tracta.

4. Dispositif selon l'une quelconque des revendications 1 à 3, dans lequel chacun des N paliers d'entraînement comprend un pignon d'entraînement denté couplé à une surface de renvoi par une chaîne (13) comprenant des palettes (14) ayant une extrémité libre (14f) flexible montées de sorte qu'en permanence, les extrémités libres d'un nombre de palettes soient en contact avec une surface externe du tuyau flexible, et dont la translation dans un sens ou dans l'autre selon le sens de rotation du palier d'entraînement correspondant applique un frottement sur la surface externe du tuyau flexible qui permet ainsi de contrôler l'extension ou la rétraction de celui-ci.

5. Dispositif selon la revendication 4, dans lequel la surface libre (14f) flexible des palettes a la géométrie d'un profil carré, en U, triangulaire, trapézoïdal, ou en peigne comprenant plusieurs lames.

6. Dispositif selon la revendication 5, dans lequel la surface libre flexible des palettes forme une surface de contact avec la surface externe du tuyau flexible, ladite surface de contact ayant une largeur moyenne mesurée dans la direction de l'axe longitudinal d'au moins 10 mm, de préférence d'au moins 15 mm, encore de préférence d'au moins 20 mm.

7. Dispositif selon l'une quelconque des revendications 1 à 3, dans lequel chacun des N paliers d'entraînement est couplé à un palier de renvoi par une courroie munie de protrusions externes dont la translation dans un sens ou dans l'autre selon le sens de rotation du palier d'entraînement correspondant applique un frottement sur une surface externe du tuyau flexible qui permet ainsi de contrôler l'extension ou la rétraction de celui-ci.

8. Dispositif selon l'une quelconque des revendications 4 à 7, dans lequel le tuyau flexible est renforcé par une spirale couplée à la surface externe du tuyau flexible et lui conférant une rigidité radiale, tout en permettant de contracter le tuyau flexible dans sa configuration contractée et de l'étendre dans sa configuration étendue en variant le pas d'ouverture entre deux spires successives de la spirale, et dans lequel le système d'entraînement comprend au moins deux, de préférence au moins trois ou plus palettes flexibles ou protrusions externes comprises entre deux spires de la spirale dans la configuration étendue du tuyau flexible.

9. Dispositif selon l'une quelconque des revendications 1 à 3, dans lequel chacun des N paliers d'entraînement est muni d'un pignon d'entraînement monté rigidement sur chaque palier d'entraînement, et comprenant une surface périphérique sensiblement cylindrique en contact avec une surface externe du tuyau flexible et dont la rotation dans un sens ou dans l'autre applique un frottement sur ladite surface externe du tuyau flexible qui permet ainsi de contrôler l'extension ou la rétraction de celui-ci.

10. Dispositif selon l'une quelconque des revendications précédentes, comprenant de plus un tube rigide (2), au moins partiellement enrobé par une portion du tuyau flexible incluant son extrémité amont, ledit tube rigide s'étendant le long d'un axe longitudinal depuis une première extrémité en communication fluidique avec une source d'air conditionné, jusqu'à une seconde extrémité qui est libre, sur une longueur égale à au moins 80%, de préférence au moins 90%, encore de préférence au moins 95% de la longueur totale du tuyau flexible dans sa configuration contractée à partir de son extrémité amont.

11. Dispositif selon la revendication 10, comprenant une bague fixe (9), qui est fixée adjacente à la deuxième extrémité du tube rigide et qui forme une surface d'appui située à l'intérieur du tuyau flexible pour le système d'entraînement qui est situé à l'extérieur du tuyau flexible.

12. Dispositif selon la revendication 10 ou 11, dans lequel l'extrémité amont du tuyau flexible est fixée à une bague de couplage (3) qui entoure le tube rigide en formant un couplage étanche entre le tube rigide et le tuyau flexible, ladite bague de couplage étant montée sur le tube rigide de sorte à pouvoir coulisser le long du tube rigide.

## Patentansprüche

1. Vorrichtung zum Aufnehmen und Ausfahren eines Schlauchs für die Zufuhr klimatisierter Luft zu einem Luftfahrzeug (12) am Boden oder zu einem beliebigen anderen Innenraum, wobei die Vorrichtung Folgendes beinhaltet:
(a) ein rohrförmiges Gehäuse (11), das sich entlang einer Längsachse Z erstreckt und ein freies und offenes erstes Ende beinhaltet, wobei das rohrförmige Gehäuse Folgendes aufnehmen kann:
(b) einen Schlauch (1), der ein stromabwärts liegendes Ende, das frei ist, und ein stromaufwärts liegendes Ende, das mit einer Einheit für klimatisierte Luft in Fluidkommunikation stehen kann und das von dem ersten Ende des Gehäuses entfernt ist, beinhaltet,
(c) ein Antriebssystem (4), das N = 4 bis 8 Antriebslager (6.1-6.6) beinhaltet, die um die Längsachse Z und jeweils senkrecht zu dieser angeordnet sind, die über einen Umfang des Schlauchs verteilt und angrenzend an das erste Ende des Gehäuses positioniert sind, wobei ein erstes Antriebslager (6.1) mit einem Motor (8) verbunden ist, der seine Drehung um seine Achse steuern kann, wobei das erste Antriebslager über Drehgelenke (7.1-7.6), die die Übertragung einer Drehung des ersten Antriebslagers auf die N - 1 anderen Antriebslager gestatten, mit den N - 1 anderen Antriebslagern in Reihe verbunden ist,
wobei es die Drehung der N Antriebslager gestattet, in einer ersten Drehrichtung das Ausfahren und in einer zweiten Drehrichtung das Zusammenziehen des Schlauchs zwischen Folgendem zu steuern:
(i) einer zusammengezogenen Konfiguration (1C), in der sich das stromabwärts liegende Ende des Schlauchs in dem Gehäuse und angrenzend an das erste Ende des Gehäuses befindet, und
(ii) einer expandierten Konfiguration (1E), in der sich das stromabwärts liegende Ende des Schlauchs außerhalb des Gehäuses und von dem ersten Ende des Gehäuses entfernt befindet,
**dadurch gekennzeichnet, dass**
das N-te Antriebslager selber über ein Drehgelenk mit dem ersten Antriebslager verbunden ist, sodass eine geschlossene Kette aus N Antriebslagern gebildet wird, die untereinander durch N Drehgelenke verbunden sind.

2. Vorrichtung nach Anspruch 1, die N = 4, 6 oder 8 Antriebslager beinhaltet, und wobei die Drehgelenke Kreuzgelenke, vorzugsweise Doppelkreuzgelenke sind.

3. Vorrichtung nach Anspruch 1, die N = 4, 5, 6, 7 oder 8 Antriebslager beinhaltet, und wobei die Drehgelenke aus homokinetischen Gelenken, vorzugsweise Rzeppa-Gelenken, Tripodegelenken oder Tracta-Gelenken, ausgewählt sind.

4. Vorrichtung nach einem der Ansprüche 1 bis 3, wobei jedes der N Antriebslager ein Antriebszahnrad beinhaltet, das mit einer Umlenkfläche gekoppelt ist, mittels einer Kette (13), die Flügel (14) beinhaltet, die ein biegsames freies Ende (14f) aufweisen und die so montiert sind, dass die freien Enden einer Anzahl von Flügeln ständig mit einer Außenfläche des Schlauchs in Kontakt sind, und deren Bewegung in der einen oder der anderen Richtung gemäß der Drehrichtung des entsprechenden Antriebslagers eine Reibung auf die Außenfläche des Schlauchs überträgt, wodurch das Ausfahren oder das Einziehen desselben gesteuert werden kann.

5. Vorrichtung nach Anspruch 4, wobei die biegsame freie Fläche (14f) der Flügel die Geometrie eines quadratischen Profils, eines U-Profils, eines dreieckigen Profils, eines trapezförmigen Profils oder eines Kammprofils, das mehrere Lamellen beinhaltet, aufweist.

6. Vorrichtung nach Anspruch 5, wobei die biegsame freie Fläche der Flügel eine Kontaktfläche zu der Außenfläche des Schlauchs bildet, wobei die Kontaktfläche eine in der Richtung der Längsachse gemessene durchschnittliche Breite von mindestens 10 mm, vorzugsweise von mindestens 15 mm, noch bevorzugter von mindestens 20 mm aufweist.

7. Vorrichtung nach einem der Ansprüche 1 bis 3, wobei jedes der N Antriebslager mit einem Umlenklager gekoppelt ist, mittels eines mit außenliegenden Vorsprüngen versehenen Riemens, dessen Bewegung in der einen oder der anderen Richtung gemäß der Drehrichtung des entsprechenden Antriebslagers eine Reibung auf eine Außenfläche des Schlauchs überträgt, wodurch das Ausfahren oder das Einziehen desselben gesteuert werden kann.

8. Vorrichtung nach einem der Ansprüche 4 bis 7, wobei der Schlauch durch eine Spirale verstärkt wird, die mit der Außenfläche des Schlauchs gekoppelt ist und ihm eine radiale Steifigkeit verleiht und die gleichzeitig gestattet, den Schlauch in seine zusammengezogene Konfiguration zusammenzuziehen und ihn in seine expandierte Konfiguration zu expandieren, indem der Öffnungsabstand zwischen zwei aufeinanderfolgenden Windungen der Spirale verändert wird, und wobei das Antriebssystem mindestens zwei, vorzugsweise drei oder mehr biegsame Flügel oder außenliegende Vorsprünge beinhaltet, die in der expandierten Konfiguration des Schlauchs zwischen zwei Windungen der Spirale liegen.

9. Vorrichtung nach einem der Ansprüche 1 bis 3, wobei jedes der N Antriebslager mit einem Antriebsrad versehen ist, das fest an jedem Antriebslager befestigt ist und eine im Wesentlichen zylindrische Umfangsfläche beinhaltet, die mit einer Außenfläche des Schlauchs in Kontakt ist und deren Drehung in der einen oder der anderen Richtung eine Reibung auf die Außenfläche des Schlauchs überträgt, wodurch das Ausfahren oder das Einziehen desselben gesteuert werden kann.

10. Vorrichtung nach einem der vorhergehenden Ansprüche, die ferner ein starres Rohr (2) beinhaltet, das mindestens teilweise von einem Abschnitt des Schlauchs, der sein stromaufwärts liegendes Ende umfasst, ummantelt wird, wobei sich das starre Rohr entlang einer Längsachse von einem ersten Ende, das mit einer Quelle klimatisierter Luft in Fluidkommunikation steht, bis zu einem zweiten Ende, das frei ist, erstreckt, über eine Länge, die ausgehend von seinem stromaufwärts liegenden Ende mindestens 80 %, vorzugsweise mindestens 90 %, noch bevorzugter mindestens 95 % der Gesamtlänge des Schlauchs in seiner zusammengezogenen Konfiguration entspricht.

11. Vorrichtung nach Anspruch 10, die einen feststehenden Ring (9) beinhaltet, der an das zweite Ende des starren Rohrs angrenzend befestigt ist und der für das Antriebssystem, das sich außerhalb des Schlauchs befindet, eine Auflagefläche, die sich innerhalb des Schlauchs befindet, bildet.

12. Vorrichtung nach Anspruch 10 oder 11, wobei das stromaufwärts liegende Ende des Schlauchs an einem Kopplungsring (3) befestigt ist, der das starre Rohr umgibt und dabei eine dichte Kopplung zwischen dem starren Rohr und dem Schlauch bildet, wobei der Kopplungsring so an dem starren Rohr montiert ist, dass er auf dem starren Rohr gleiten kann.

## Claims

1. Device for storing and extending a flexible pipe for supplying conditioned air to an aircraft (12) on the ground or any other interior space, the said device comprising:
(a) a tubular housing (11) extending along a longitudinal axis Z and comprising a first free and open end, the said tubular housing serving to store
(b) a flexible pipe (1) comprising a downstream end which is free and an upstream end which can be in fluidic communication with an air conditioning unit and which is remote from the first end of the housing,
(c) a drive system (4) comprising N = 4 to 8 drive bearings (6.1-6.6) arranged around and each perpendicular to the longitudinal axis Z, distributed around a perimeter of the flexible pipe and located adjacent to the first end of the housing, a first drive bearing (6.1) being connected to a motor (8) that can control its rotation about its axis, the said first drive bearing being connected in series to the N-1 other drive bearings by rotation joints (7.1-7.6) making it possible to transmit a rotation from the first drive bearing to the N-1 other drive bearings, the rotation of the N drive bearings making it possible to control, in a first direction of rotation, the extension and, in a second direction of rotation, the contraction of the flexible pipe between
(i) a contracted configuration (1C) in which the downstream end of the flexible pipe is located in the housing and adjacent to the first end of the housing, and
(ii) an extended configuration (1E) in which the downstream end of the flexible pipe is outside the housing and remote from the first end of the housing,
**characterized in that**
the N^{th} drive bearing is itself connected by a rotation joint to the first drive bearing, thus forming a closed chain of N drive bearings connected to one another by N rotation joints.

2. Device according to Claim 1, comprising N = 4, 6 or 8 drive bearings and in which the rotation joints are Cardan joints (or universal joints), preferably double Cardan joints.

3. Device according to Claim 1, comprising N = 4, 5, 6, 7 or 8 drive bearings and in which the rotation joints are selected from among constant-velocity joints, preferably Rzeppa joints, tripod joints or Tracta joints.

4. Device according to any one of Claims 1 to 3, in which each of the N drive bearings comprises a toothed drive pinion coupled to a return surface by a chain (13) comprising paddles (14) having a flexible free end (14f), these paddles being mounted such that at any moment the free ends of a number of paddles are in contact with an external surface of the flexible pipe, and of which the translation in one direction or the other depending on the direction of rotation of the corresponding drive bearing applies a friction to the external surface of the flexible pipe, which thus makes it possible to control the extension or the retraction of the latter.

5. Device according to Claim 4, in which the flexible free surface (14f) of the paddles has the geometry of a square profile, a U-shaped profile, a triangular profile, a trapezoidal profile or a comb-shaped profile comprising multiple blades.

6. Device according to Claim 5, in which the flexible free surface of the paddles forms a contact surface with the external surface of the flexible pipe, the said contact surface having an average width, measured in the direction of the longitudinal axis, of at least 10 mm, preferably at least 15 mm, more preferably at least 20 mm.

7. Device according to any one of Claims 1 to 3, in which each of the N drive bearings is coupled to a return bearing by a belt provided with external protrusions, the translation of which in one direction or the other depending on the direction of rotation of the corresponding drive bearing applies a friction to an external surface of the flexible pipe, which thus makes it possible to control the extension or the retraction of the latter.

8. Device according to any one of Claims 4 to 7, in which the flexible pipe is reinforced by a spiral coupled to the external surface of the flexible pipe and lending it radial rigidity while making it possible to contract the flexible pipe into its contracted configuration and to extend it into its extended configuration by varying the pitch spacing between two successive turns of the spiral, and in which the drive system comprises at least two, preferably at least three or more, flexible paddles or external protrusions comprised between two turns of the spiral in the extended configuration of the flexible pipe.

9. Device according to any one of Claims 1 to 3, in which each one of the N drive bearings is provided with a drive pinion rigidly mounted on each drive bearing and comprising an essentially cylindrical peripheral surface in contact with an external surface of the flexible pipe, and of which the rotation in one direction or the other applies a friction to the external surface of the flexible pipe, which thus makes it possible to control the extension or the retraction of the latter.

10. Device according to any one of the preceding claims, further comprising a rigid tube (2) that is at least partially enclosed by a portion of the flexible pipe including its upstream end, the said rigid tube extending along a longitudinal axis from a first end in fluid communication with a source of conditioned air, to a second end which is free, over a length equal to at least 80%, preferably at least 90%, more preferably at least 95% of the total length of the flexible pipe in its contracted configuration starting at its upstream end.

11. Device according to Claim 10, comprising a fixed ring (9) which is attached adjacent to the second end of the rigid tube and which forms a bearing surface located inside the flexible pipe for the drive system which is located outside the flexible pipe.

12. Device according to Claim 10 or 11, in which the upstream end of the flexible pipe is attached to a coupling ring (3) which surrounds the rigid tube forming a sealed coupling between the rigid tube and the flexible pipe, the said coupling ring being mounted on the rigid tube so as to be able to slide along the rigid tube.
